# FASCICULE DE BREVET EUROPEEN

(11) **EP 0 793 010 B1**
(45) Date de publication et mention de la délivrance du brevet: **13.09.2000**
(21) Numéro de dépôt: 97400323.8
(22) Date de dépôt: 13.02.1997
(51) Int. Cl.: F02K 7/10

(54) **Dispositif d'injection de combustible pour statoréacteur d'aéronef**
Brennstoffeinspritzeinrichtung für ein Staustrahltriebwerk
Fuel injector for a ramjet

(30) Priorité: 01.03.1996 FR 9602602
(43) Date de publication de la demande: 03.09.1997
(73) Titulaire: AEROSPATIALE MATRA, 75016 Paris (FR)
(72) Inventeur: Chevalier, Alain, 18000 Asnieres-Les-Bourges (FR); Bouchez, Marc, 18000 Bourges (FR)
(74) Mandataire: Bonnetat, Christian

(56) Documents cités:
- WO-A-88/08927
- FR-A- 2 636 677
- GB-A- 2 216 999
- US-A- 5 214 914
- US-A- 5 253 474
- nasa contractor report 3141 Thermal-Structural Design Study of a n Airframe-Integrated Scramjet O.A.Buchmann 1979 XP002018549
- JOURNAL OF AIRCRAFT, vol. 13, no. 3, Mars 1976, NEW YORK US, pages 19192-197, XP002018548 A.R. WIETING & R.W. GUY: "Thermal-Structural Design/Analysis of an Airframe Integrated Hydrogen-Cooled Scramjet"
- JOURNAL OF PROPULSION AND POWER, vol. 10, no. 2, 1 Mars 1994, pages 183-190, XP000438153 BOGDANOFF D W: "ADVANCED INJECTION AND MIXING TECHNIQUES FOR SCRAMJET COMBUSTORS"
- JOURNAL OF PROPULSION AND POWER, vol. 11, no. 2, 1 Mars 1995, pages 301-307, XP000497935 MASUYA G ET AL: "IGNITION AND COMBUSTION PERFORMANCE OF SCRAMJET COMBUSTORS WITH FUAL INJECTION STRUTS"

## Description

La présente invention concerne les statoréacteurs et, plus particulièrement, un dispositif d'injection de combustible pour un statoréacteur d'aéronef à vol supersonique et/ou hypersonique, destiné à fonctionner sur une large plage de vitesses. La plage de vitesses envisagée se situe ainsi, typiquement, entre des nombres de Mach de 1-2 à 15-20 (on pourrait envisager une participation à la poussée à Mach 0,8 par exemple).

Les statoréacteurs sont des moteurs utiles pour assurer la propulsion d'aéronefs évoluant sur une large plage de vitesses avec une faible consommation spécifique. Le combustible utilisé usuellement pour les applications à hautes vitesses est l'hydrogène, qui est injecté généralement sous forme gazeuse. Des hydrocarbures, au pouvoir calorifique plus faible mais à densité plus forte, peuvent également être utilisés sur une partie du domaine de vol. Toutefois, la bonne répartition du combustible dans toute la veine, le mélange optimal, l'allumage correct et la stabilisation de la combustion nécessitent des dispositifs d'injection performants aussi bien dans le cas d'une combustion subsonique que dans le cas d'une combustion supersonique. Les phénomènes associés à ces deux modes de combustion étant différents, les géométries d'injection associées sont souvent différentes. De plus, pour fonctionner sur une large plage de vol, un statoréacteur supportant les deux modes de combustion, subsonique et supersonique, doit permettre leur transition. Celle-ci nécessite généralement une modification mécanique de la géométrie du corps du statoréacteur et du dispositif d'injection.

Cela peut, bien entendu, présenter des difficultés de mise en oeuvre, tant à la fabrication qu'en service.

La présente invention a pour but d'éviter ces inconvénients et concerne un dispositif d'injection assurant une transition aérodynamique, et non plus mécanique, entre la combustion subsonique et la combustion supersonique.

A cet effet, le statoréacteur pour un aéronef à vol supersonique et/ou hypersonique, destiné à fonctionner sur une large plage de vitesses, ledit statoréacteur comprenant, dans un corps d'axe longitudinal X-X, une entrée de comburant et, en aval de celle-ci, dans le sens d'écoulement du jet de gaz, une chambre de combustion, dans laquelle est effectué le mélange comburant-combustible destiné à être brûlé, et une tuyère destinée à canaliser les gaz sortant de la chambre de combustion, et un dispositif d'injection de combustible prévu au niveau de ladite chambre de combustion et comportant au moins un injecteur ayant une structure présentant une pluralité de parois espacées les unes des autres, s'étendant généralement suivant l'axe longitudinal X-X du corps de statoréacteur et formant, deux à deux, les ailes d'un élément profilé sensiblement sous forme de U en section transversale, des premiers orifices d'injection débouchant dans chaque espace formé par deux parois adjacentes de ladite pluralité de parois, et des seconds orifices d'injection débouchant à l'extrémité aval dudit élément profilé, est caractérisé en ce que, lesdits premiers orifices d'injection débouchent sur la face supérieure --en condition de vol normal-- de l'âme dudit élément profilé.

Ainsi, le pilotage des différents régimes de combustion peut être effectué, sans avoir recours à des pièces mobiles (transition mécanique), au niveau du dispositif d'injection, en jouant simplement sur la répartition du débit de combustible injecté dans les espaces entre des parois adjacentes de ladite structure (injection dite "primaire") et à l'extrémité aval de cette dernière (injection dite "secondaire").

On remarquera que le document FR-A-2 636 677 décrit un statoréacteur dont la structure est semblable à celle décrite dans la partie pré-caractérisante ci-dessus. Cependant, l'objet de ce dispositif antérieur est de faciliter le mélange du carburant avec l'air d'admission du moteur et de refroidir l'injecteur pour assurer sa protection contre le choc aux vitesses hypersoniques de l'air comprimé d'admission.

Dans le statoréacteur conforme à la présente invention, il est préférable que l'âme dudit élément profilé soit inclinée de l'amont vers l'aval de ladite structure de façon à former une section transversale dudit élément profilé d'aire maximale à l'extrémité aval de celui-ci, et lesdits premiers orifices d'injection sont situés au voisinage de la partie amont de ladite âme.

Avantageusement, lesdites parois s'étendent au moins sensiblement parallèlement aux faces latérales du corps de statoréacteur ou au moins sensiblement parallèlement aux faces supérieure et inférieure --en condition de vol normal-- de celui-ci.

Les figures du dessin annexé feront bien comprendre comment l'invention peut être réalisée. Sur ces figures, des références identiques désignent de éléments semblables.

La figure 1 est une vue en perspective schématique d'un statoréacteur équipé d'un exemple de réalisation du dispositif d'injection selon l'invention.

La figure 2 est une vue en perspective d'un exemple de réalisation d'un injecteur selon l'invention.

La figure 3 est une coupe longitudinale selon la ligne III-III de la figure 2.

Les figures 4A et 4B illustrent, en coupe, le fonctionnement du statoréacteur, au niveau du dispositif d'injection, en combustion subsonique et en combustion supersonique, respectivement.

Le dispositif d'injection de combustible selon l'invention est destiné à équiper un statoréacteur d'aéronef à vol supersonique et/ou hypersonique adapté pour fonctionner sur une large plage de vitesses, soit d'un nombre de Mach de 1-2 à 15-20.

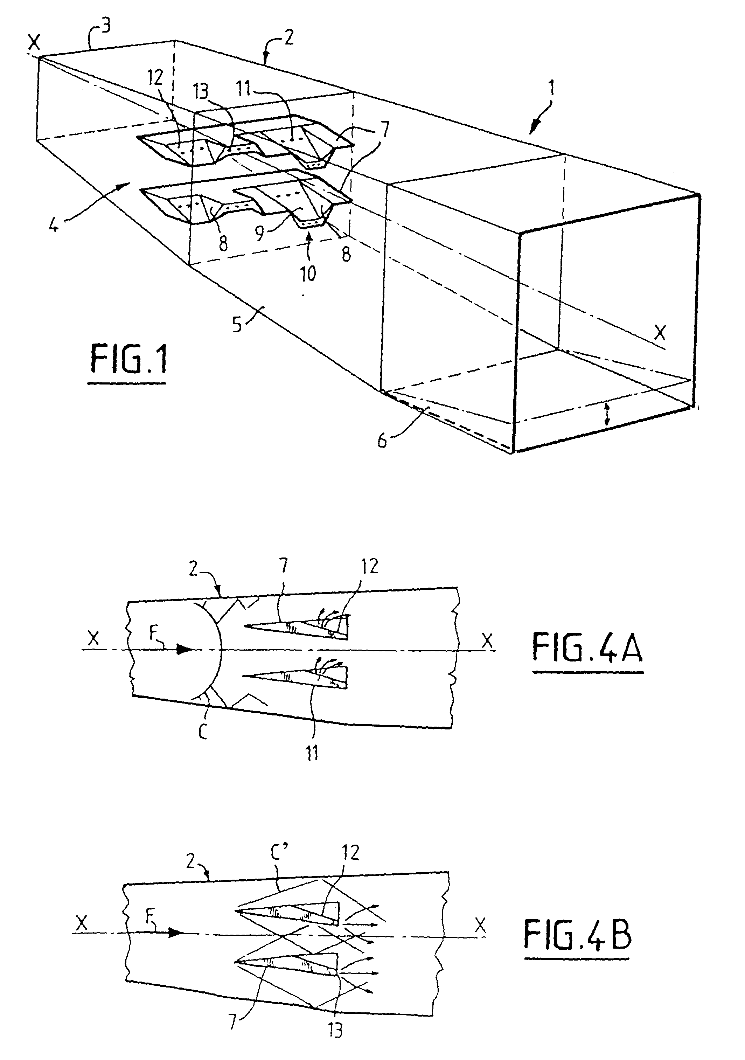

Le statoréacteur 1, représenté schématiquement sur la figure 1, comprend dans un carter ou enveloppe 2 :
- une entrée de comburant 3, notamment une prise d'air, en amont du moteur, destiné à être implanté sous l'intrados du fuselage de l'aéronef associé au statoréacteur,
- un dispositif d'injection de combustible 4, prévu en aval de l'entrée de comburant 3,
- le carter ou enveloppe 2 enfermant, de l'amont vers l'aval dans le sens d'écoulement du jet symbolisé par la flèche F sur les figures, une chambre de combustion 5, contenant le dispositif d'injection, dans laquelle est effectué le mélange comburant-combustible destiné à être brûlé, et une tuyère 6 présentant un col destinée à canaliser les gaz sortant de la chambre de combustion.

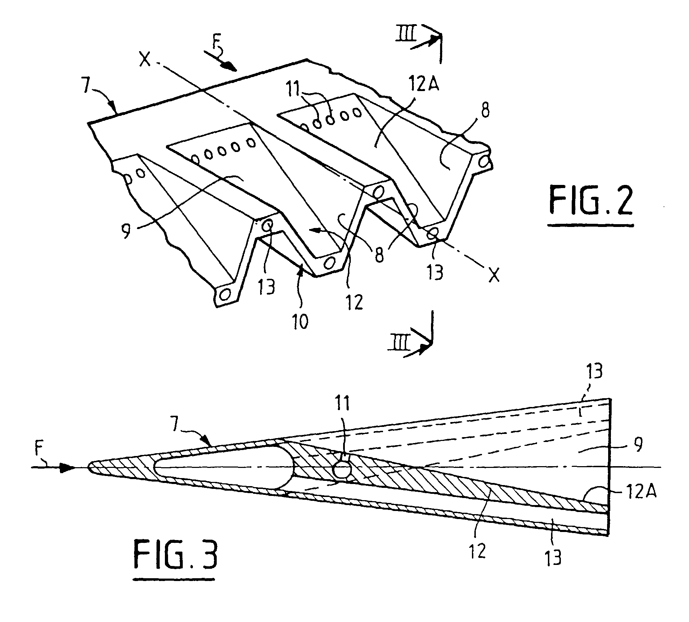

Plus particulièrement, comme on le voit sur la figure 1, le dispositif d'injection de combustible 4 comporte des injecteurs 7 ayant une structure (mât) présentant, comme on le voit mieux sur la figure 2, une pluralité de parois 8 espacées les unes des autres, s'étendant généralement suivant l'axe X-X du corps 2 du statoréacteur, l'injection de combustible pouvant avoir lieu, d'une part, dans chaque espace 9 formé par deux parois adjacentes 8 et, d'autre part, à l'extrémité aval de ladite structure (culot du mât).

Dans l'exemple de réalisation de l'injecteur 7, illustré par la figure 1 et les figures 2 et 3, les parois 8 forment, deux à deux, les ailes d'un élément profilé 10 sensiblement sous forme de U en section transversale, des premiers orifices d'injection 11 (injection primaire) débouchant sur la face supérieure 12A de l'âme 12 de l'élément profilé 10 et des seconds orifices d'injection 13 (injection secondaire) débouchant à l'extrémité aval libre de l'élément profilé (culot du mât).

Comme on le voit sur les figures, l'âme 12 de l'élément profilé 10 est inclinée de l'amont vers l'aval de la structure de façon à former une section transversale de l'élément profilé d'aire maximale à l'extrémité aval (libre) de celui-ci. Les premiers orifices d'injection 11 sont situés au voisinage de la partie amont de l'âme 12.

On remarquera que, sur les figures, les parois 8 sont au moins sensiblement parallèles aux faces latérales du corps 2 du statoréacteur. Elles pourraient être également orthogonales auxdites faces.

La figure 4A illustre le fonctionnement du statoréacteur 1 en combustion subsonique. L'allumage du combustible injecté à partir des premiers orifices d'injection 11 entraîne la formation d'un choc normal C en amont. La stabilisation et le contrôle de l'onde de choc normale est réalisée en jouant sur le col (mobile) de la tuyère 6 (en traits interrompus sur la figure 1).

La figure 4B illustre le fonctionnement du statoréacteur 1 en combustion supersonique. L'injection longitudinale à l'extrémité aval de l'injecteur 7 (seconds orifices d'injection 13) entraîne la formation d'une combustion supersonique stabilisée notamment par l'onde de choc oblique C'.

Le dispositif d'injection selon l'invention permet ainsi une transition aérodynamique entre les deux régimes de combustion, une injection de faible débit engendrant si nécessaire le blocage de l'écoulement initiant le choc droit conduisant à l'écoulement subsonique dans la chambre de combustion.

Un débit très faible peut permettre de créer avantageusement des zones facilitant l'allumage, sans pour autant initier de choc droit. En d'autres termes, sous certaines conditions de fonctionnement, pour assurer si nécessaire l'allumage lors de la combustion supersonique, les premiers orifices d'injection peuvent être avantageusement alimentés avec un débit très faible mais non nul afin de créer des zones (très localisées) à plus haute température permettant l'allumage, sans créer le choc droit C de la figure 4A, l'écoulement restant globalement supersonique comme visible sur la figure 4B.

En fait, l'injection entre les parois 8 de la structure 7 définie ci-dessus entraîne un écoulement extrêmement complexe qui dépend fortement des interactions entre les structures de choc tridimensionnelles, et la couche limite présente une influence importante.

Sans une telle injection, l'écoulement (supersonique) issu d'une telle géométrie induit d'excellentes conditions pour l'allumage : faible vitesse, conditions thermodynamiques (pression, température) élevées. Il suffit alors d'injecter le combustible au culot des mâts (de section relativement peu importante) pour obtenir une combustion supersonique satisfaisante. Comme on l'a vu, les injecteurs montrés comme exemple utilisent une injection au culot des mâts.

Cependant, quand on injecte du combustible dans la structure 7 de géométrie particulière décrite ci-dessus, l'apport de masse, l'allumage, et la combustion qui naissent dans la zone interne provoquent une modification très importante de la conformation de l'écoulement. Comme schématisé sur les figures, il apparaît une onde de choc puissante, qui augmente, de façon très importante, la pression et la température et conduit à la formation d'une onde de choc normale et stable. La pénétration du jet injecté dans cette zone augmente notablement, même s'il s'agit d'un combustible liquide (à cet égard, il convient de noter qu'outre l'hydrogène d'autres combustibles peuvent être utilisés avec ce type d'injecteur, comme le kérosène ou le méthane). La combustion qui a ensuite lieu dans la chambre de combustion est alors subsonique.

## Revendications

1. Statoréacteur (1) pour un aéronef à vol supersonique et/ou hypersonique, destiné à fonctionner sur une large plage de vitesses, ledit statoréacteur (1) comprenant, dans un corps (2) d'axe longitudinal (X-X), une entrée de comburant (3) et, en aval de celle-ci, dans le sens d'écoulement du jet de gaz, une chambre de combustion (5), dans laquelle est effectué le mélange comburant-combustible destiné à être brûlé, une tuyère (6) destinée à canaliser les gaz sortant de la chambre de combustion, et un dispositif d'injection de combustible (4) étant prévu au niveau de ladite chambre de combustion (5) et comportant au moins un injecteur (7) ayant une structure présentant une pluralité de parois (8) espacées les unes des autres, s'étendant généralement suivant l'axe longitudinal (X-X) du corps (2) de statoréacteur (1) et formant, deux à deux, les ailes d'un élément profilé (10) sensiblement sous forme de U en section transversale, des premiers orifices d'injection (11) débouchant dans chaque espace (9) formé par deux parois (8) adjacentes de ladite pluralité de parois et des seconds orifices d'injection (13) débouchant à l'extrémité aval dudit élément profilé (10),
caractérisé en ce que lesdits premiers orifices d'injection (11) débouchent sur la face supérieure (12A) --en condition de vol normal-- de l'âme (12) dudit élément (10) .

2. Statoréacteur selon la revendication 1,
caractérisé en ce que l'âme (12) dudit élément profilé (10) est inclinée de l'amont vers l'aval de ladite structure de façon à former une section transversale dudit élément profilé (10) d'aire maximale à l'extrémité aval de celui-ci, et en ce que lesdits premiers orifices d'injection (11) sont situés au voisinage de la partie amont de ladite âme (12).

3. Statoréacteur selon l'une des revendications 1 ou 2,
caractérisé en ce que lesdites parois (8) s'étendent au moins sensiblement parallèlement aux faces latérales du corps (2) du statoréacteur.

4. Statoréacteur selon l'une des revendications 1 ou 2,
caractérisé en ce que lesdites parois (8) s'étendent au moins sensiblement parallèlement aux faces supérieure et inférieure --en condition de vol normal-- de corps (2) du statoréacteur.

## Patentansprüche

1. Staustrahltriebwerk (1) für ein Über- und/oder Hyperschallflugzeug, das in einem großen Geschwindigkeitsbereich eingesetzt werden soll, wobei das genannte Staustrahltriebwerk (1) in einem Körper (2) mit Längsachse X-X einen Sauerstoffträgereinlauf (3) und hinter diesem in der Strömungsrichtung des Gasstrahls eine Brennkammer (5), in der das Sauerstoffträger-Brennstoffgemisch, das verbrannt werden soll, hergestellt wird und eine Düse(6) umfaßt, die die aus der Brennkammer austretenden Gase leiten soll, und eine an der genannten Brennkammer (5) vorgesehene Brennstoffeinspritzeinrichtung (4), die mindestens eine Einspritzdüse (7) umfaßt, die eine Struktur mit mehreren, in einem Abstand zueinander angeordneten Wänden (8) besitzt, die sich im allgemeinen entlang der Längsachse (X-X) des Körpers (2) des Staustrahltriebwerks (1) erstrecken und paarweise die Flügel eines Profilelements (10) mit im wesentlichen U-förmigem Querschnitt bilden, wobei erste Einspritzöffnungen (11), die in jedem Raum (9) münden, der von zwei aneinandergrenzenden Wänden (8) der genannten Vielzahl von Wänden gebildet wird, und zweite Einspritzöffnungen (13) am hinteren Ende des genannten Profilelements (10) münden, dadurch gekennzeichnet, daß die genannten ersten Einspritzöffnungen (11) auf der oberen Fläche (12A)- bei normalem Flug - des Stegs (12) des genannten Profilelements (10) münden.

2. Staustrahltriebwerk gemäß Anspruch 1, dadurch gekennzeichnet, daß der Steg (12) des genannten Profilelements (10) von der Vorderseite zur hinteren Seite der genannten Struktur hin geneigt ist, so daß ein Querschnitt des genannten Profilelements (10) mit maximaler Querschnittsfläche an dessen hinterem Ende gebildet wird, und dadurch, daß die genannten ersten Einspritzöffnungen (11) in Nähe des vorderen Teils des genannten Stegs (12) liegen.

3. Staustrahltriebwerk gemäß einem der Ansprüche 1 oder 2, dadurch gekennzeichnet, daß sich die genannten Wände (8) mindestens im wesentlichen parallel zu den Seitenflächen des Körpers (2) des Staustrahltriebwerks erstrecken.

4. Staustrahltriebwerk gemäß einem der Ansprüche 1 oder 2, dadurch gekennzeichnet, daß sich die genannten Wände (8) mindestens im wesentlichen parallel zur oberen und unteren Fläche - bei normalem Flug - des Körpers (2) des Staustrahltriebwerks erstrecken.

## Claims

1. Ramjet (1) for supersonic and/or hypersonic aircraft, designed to operate over a wide range of speeds, said ramjet (1) comprising, in a body (2) having a longitudinal axis (X-X), a combustion supporting gas inlet (3) and, downstream thereof, in the direction of flow of the jet of gas, a combustion chamber (5) in which combustion supporting gas is mixed with fuel to be burned, and a nozzle (6) adapted to channel gases leaving the combustion chamber, and a fuel injection device (4) being provided at the level of said combustion chamber (5) and including at least one injector (7) having a structure with a plurality of spaced walls (8) extending generally along said longitudinal axis (X-X) of said ramjet (1) body (2) and forming, in pairs, the wings of a profiled member (10) that is substantially U-shaped in cross section, first injection orifices (11) opening into each space (9) formed by two adjacent walls (8) of said plurality of walls and second injection orifices (13) opening at the downstream end of said profiled member (10),
characterized in that said first injection orifices (11) open onto the top face (12A) - in normal flight - of the core (12) of said profiled member.

2. Ramjet as claimed in claim 1, characterized in that the core (12) of said profiled member (10) is inclined from the upstream end towards the downstream end of said structure so as to form a cross section of said profiled member (10) of maximal area at a downstream end thereof and said first injection orifices (11) are near the upstream part of said core (12).

3. Ramjet as claimed in claim 1 or 2, characterized in that said walls (8) are at least substantially parallel to lateral faces of the ramjet body (2).

4. Ramjet as claimed in claim 1 or 2, characterized in that said walls (8) are at least substantially parallel to top and bottom faces - in formal flight - of the ramjet body (2).
